# EUROPÄISCHE PATENTSCHRIFT

(11) **EP 1 190 319 B1**
(45) Veröffentlichungstag und Bekanntmachung des Hinweises auf die Patenterteilung: **19.03.2003**
(21) Anmeldenummer: 00926991.1
(22) Anmeldetag: 19.04.2000
(51) Int. Cl.: G06F 11/00

(54) **SICHERUNG EINES RECHNERKERNS GEGEN ÄUSSERE MANIPULATIONEN**
PROTECTION OF THE CORE PART OF A COMPUTER AGAINST EXTERNAL MANIPULATION
PROTECTION D'UNE UNITE CENTRALE D'ORDINATEUR CONTRE DES MANIPULATIONS EXTERIEURES

(30) Priorität: 23.04.1999 DE 19918620
(43) Veröffentlichungstag der Anmeldung: 27.03.2002
(73) Patentinhaber: Giesecke & Devrient GmbH, 81677 München (DE)
(72) Erfinder: BALDISCHWEILER, Michael, D-81929 München (DE)
(74) Vertreter: Klunker . Schmitt-Nilson . Hirsch
(86) Internationale Anmeldenummer: EP0003530
(87) Internationale Veröffentlichungsnummer: WO00065442

(56) Entgegenhaltungen:
- WO-A-97/04394
- US-A- 4 727 544
- RADAI Y: "CHECKSUMMING TECHNIQUES FOR ANTI-VIRAL PURPOSES" VIRUS BULLETIN CONFERENCE,GB,VIRUS BULLETIN LTD., ABINGTON, September 1991 (1991-09), Seiten 39-68, XP000700179

## Beschreibung

Die vorliegende Erfindung betrifft die Sicherung eines Rechners gegen äußere Manipulationen, insbesondere die Sicherung der im Rechnerkern bzw. zentralen Verarbeitungseinheit (CPU) vorliegenden Daten. Diese Erfindung findet insbesondere Anwendung bei Chipkarten, da diese gegen Manipulationen von außen besonders gesichert sein müssen.

Es ist bekannt, Speicherbereiche eines Rechners zum Beispiel durch Busverschlüsselung, Speicherverschlüsselung und dergleichen gegen Manipulationen zu schützen. Aus DE 37 09 524 C2 ist beispielsweise eine Prüfroutine zur Überprüfung der Speicherzelleninhalte eines Programmspeichers bekannt. Durch Prüfsummenbildung über die Speicherzelleninhalte jeweils zu Beginn oder während eines laufenden Programms und Vergleich mit einer im Programmspeicher zuvor abgelegten Prüfsumme läßt sich eine Veränderung der ursprünglichen Speicherzelleninhalte oder auch eine erst im Betrieb auftretende Veränderung erkennen, was zu einer Fehlermeldung führt.

Aufgabe der vorliegenden Erfindung ist es, eine Möglichkeit vorzuschlagen, wie der Rechner gegen äußere Manipulationen besser gesichert werden kann.

Die Aufgabe wird erfindungsgemäß durch ein Verfahren, durch eine zentrale Verarbeitungseinheit zur Durchführung dieses Verfahrens und durch einen Rechner bzw. eine Chipkarte mit einer solchen zentralen Verarbeitungseinheit gemäß den Merkmalen der nebengeordneten Ansprüche gelöst. In den Unteransprüchen sind vorteilhafte Ausgestaltungen der Erfindung angegeben.

Die Erfindung geht davon aus, daß durch eine Sicherung der im Rechnerkern, das heißt in der zentralen Verarbeitungseinheit (CPU) des Rechners, vorliegenden Daten gegen äußere Manipulationen die Sicherheit des Rechners erhöht werden kann, da im Rechnerkern die Daten unverschlüsselt vorliegen und daher leicht manipulierbar sind.

Um derartige Manipulation zu erkennen, wird nach der Verarbeitung eines Befehls durch die CPU aus mehreren Registerinhalten der CPU durch mathematische Verknüpfung, beispielsweise durch Exklusiv-Oder-Verknüpfung (XOR-Verknüpfung), eine Checksumme ermittelt und als End-Checksumme in einem Speicher abgelegt. Vor der Verarbeitung des nächsten Befehls durch die CPU wird erneut eine Checksumme gebildet, das ist die Anfangs-Checksumme. Durch Vergleich der Anfangs-Checksumme mit der End-Checksumme, die übereinstimmen müssen, läßt sich feststellen, ob Registerinhalte der CPU nach der letzten Befehlsverarbeitung manipuliert wurden. Als Registerinhalte kommen die Inhalte jener Bereiche der CPU in Betracht, die einen von Null verschiedenen Zustand annehmen können, wie z.B. bei dem Prozessortyp 8051 der Accu, B-Accu, Datapointer (DPTR, DPL, DPH), Register (R0 bis R7) der Registerbänke, Programmstatuswort (PSW), Stackpointer (SP), Special Function-Register (SPR) und dergleichen.

Zur weiteren Erhöhung der Sicherheit kann zusätzlich beim Laden eines Befehls ein Zähler gestartet werden, welcher die Taktzyklen, die zur Abarbeitung des Befehls notwendig sind, zählt. Der Zähler ist dabei vorzugsweise hardwaremäßig aufgebaut. Eine Logik entnimmt dem Befehlsopcode die Anzahl der zur Abarbeitung notwendigen Taktzyklen und setzt diese in einen Zählerwert um. Der Zähler läuft dann parallel zum ausgeführten Befehl.

Es wird überprüft, ob der abzuarbeitende Befehl innerhalb der angegebenen Taktzyklen abgearbeitet wird. Für den Fall, daß der Befehl nicht innerhalb des vorgegebenen Zeitraums abgearbeitet wurde, wird beispielsweise die Taktversorgung eingestellt, so daß eine weitere Abarbeitung von Befehlen nicht mehr möglich ist. Alternativ kann auch ein Reset ausgelöst und somit die Zentraleinheit zurückgesetzt werden. Die gleichen Maßnahmen können getroffen werden, wenn der Befehl vorzeitig abgearbeitet wurde, d.h. wenn dem Befehlszähler noch nicht in seinem Grenzwert angelangt ist und bereits ein neuer Operationscode erkannt wurde.

Die logische Verknüpfung der sicherheitsrelevanten Register kann durch Hardware oder Software realisiert werden. Die Checksummenbildung zwischen zwei aufeinanderfolgenden Befehlen kann beispielsweise aufgrund zufälliger oder definierter Ereignisse oder ständig erfolgen.

Die Erfindung wird nachfolgend anhand der Zeichnungen näher erläutert.
Es zeigen:
- Fig. 1: den Aufbau eines Mikrocontrollers am Beispiel eines 8051-Prozessors und
- Fig. 2: eine Logik zur Verknüpfung mehrerer Bereiche der zentralen Verarbeitungseinheit.

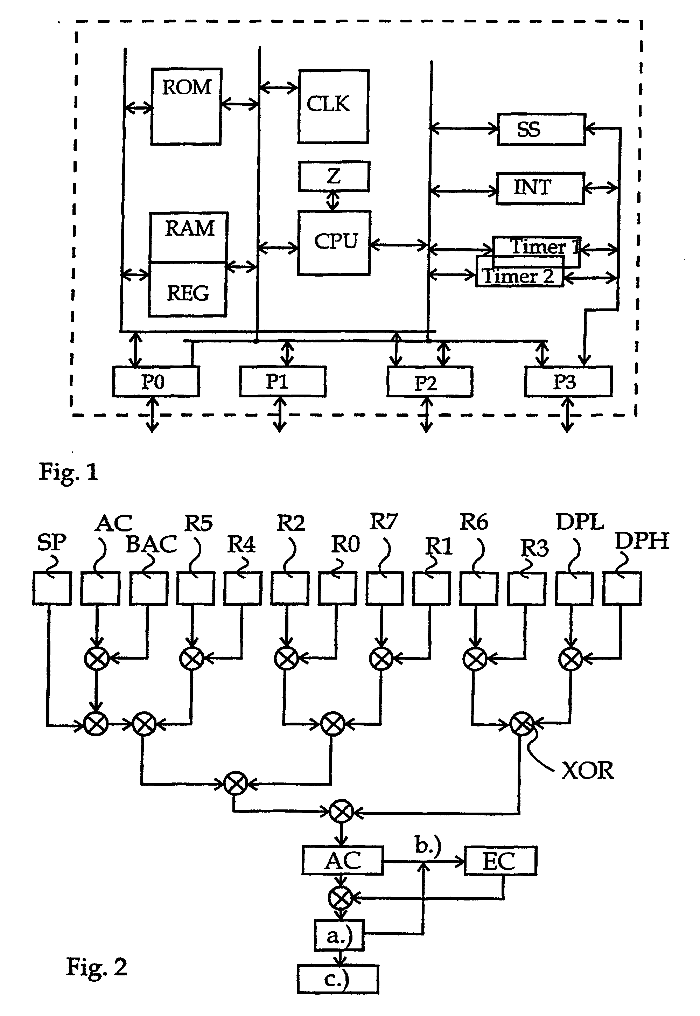

Fig. 1 zeigt den Aufbau eines 8051-Prozessors, das ist ein 8-Bit-Prozessor. Während mit bekannten Verschlüsselungsverfahren die Daten durch Busoder Speicherverschlüsselung vor Manipulation geschützt werden, liegen die Daten im Kern des Rechners, d. h. in der zentralen Verarbeitungseinheit bzw. CPU, unverschlüsselt vor. Mit dem erfindungsgemäßen Verfahren wird nun ermittelt, ob eines oder mehrere Register der CPU manipuliert worden sind.

In Fig. 2 sind beispielhaft solche sicherheitsrelevanten Bereiche der CPU angegeben, die manipuliert werden könnten, nämlich Stackpointer SP, Akku AC, B-Akku BAC, Register RO bis R7, Data-Pointer DPL und DPH zu den unteren bzw. oberen Bereichen des internen RAM. Diese Register werden miteinander logisch verknüpft, um eine Checksumme zu bilden. In Fig. 2 sind jeweils zwei 8-Bit-Register durch ein Exklusiv-Oder-Gatter (XOR) miteinander verknüpft. So ergibt sich aus der XOR-Verknüpfung der Register RO und ein neues 8-Bit-Muster, das wiederum XOR-verknüpft wird mit dem 8-Bit-Muster, das sich aus der XOR-Verknüpfung der Register R1 und R7 ergibt. Durch weitere XOR-Verknüpfung der sich jeweils ergebenden 8-Bit-Muster ergibt sich schließlich ein 8-Bit-Muster, das als Checksumme dient und in Fig. 2 mit "Anfangs-Checksumme" bezeichnet ist. Anstelle der XOR-Verknüpfung, welche insbesondere hinsichtlich des Aufwandes vorteilhaft ist, können selbstverständlich auch andere Ausführungsformen zur Bildung der Checksumme gewählt werden.

Wenn die Verknüpfung der Register hardwaremäßig durch logische Verknüpfungsglieder ausgeführt ist, ändert sich die Checksumme unmittelbar, wenn sich der Inhalt eines Registers ändert. D.h., während der Abarbeitung eines in der CPU verarbeiteten Befehls ändert sich die Checksumme gegebenenfalls mehrfach. Entscheidend für die Durchführung des Verfahrens sind aber nur die Checksumme nach Abarbeitung eines Befehls und vor Abarbeitung des nächstfolgenden Befehls, da diese beiden Checksummen (End-Checksumme des einen Befehls und Anfangs-Checksumme des nächstfolgenden Befehls) in einem Komparator miteinander verglichen werden.

Der Vergleich wird wie folgt durchgeführt: Die sich am Ende der Abarbeitung eines ersten Befehls einstellende Checksumme wird als End-Checksumme in einem Speicher auf der CPU abgelegt. Um nun festzustellen, ob nach der Abarbeitung dieses ersten Befehls und vor dem Laden des nächstfolgenden, zweiten Befehls in die CPU eine Manipulation der CPU erfolgt ist, wird parallel zum Laden dieses zweiten Befehls die Anfangs-Checksumme wie eingangs beschrieben gebildet. In einem ersten Schritt a.) wird die Anfangs-Checksumme mit der in dem Speicher abgelegten End-Checksumme aus dem zuvor abgearbeiteten ersten Befehl mittels eines Komparators verglichen. Für den Fall, daß keine Manipulation an der CPU vorgenommen worden ist, stimmen Anfangs- und End-Checksumme überein und der Wert des Vergleichsergebnisses ist Null. Der Komparator gibt ein Signal aus, aufgrund dessen in einem zweiten Schritt b.) nach Abarbeitung des zweiten Befehls die gerade anliegende Checksumme als neue End-Checksumme in den Speicher eingespeichert wird. D.h., die Abarbeitung des zweiten Befehls wird in diesem Falle nicht unterbrochen. Ergibt sich hingegen beim Vergleich der Anfangs-Checksumme mit der End-Checksumme ein Wert ungleich Null, so ist auf eine Manipulation der CPU zu schließen. Das Ausgangssignal des Komparators veranlaßt dann anstelle des zweiten Schritts b.) eine Fehlermeldung c.), die in dem in Fig. 2 dargestellten Fall einen Abbruch der Befehlsverarbeitung verursacht. Beispielsweise kann der Prozessor angehalten werden, ein Sicherheitssensor kann aktiv geschaltet werden oder im Falle einer Chipkarte kann die Chipkarte vom Terminal einbehalten werden.

Der zuvor beschriebene Sicherheitsmechanismus kann auch rein softwaremäßig realisiert werden, indem die Checksummen einerseits am Ende einer Befehlsabarbeitung und andererseits zu Beginn der nächsten Befehlsabarbeitung ermittelt und miteinander verglichen werden. Das entsprechende Programm kann beispielsweise in dem ROM bzw. EPROM des Prozessors gespeichert sein und die End-Checksumme kann in dem bitadressierbaren RAM des Prozessors abgelegt werden.

Das beschriebene Verfahren braucht nicht vor jedem abzuarbeitenden Befehl durchgeführt zu werden. Eine Ausgestaltung der Erfindung sieht vor, daß die Durchführung des Verfahrens von einem zufälligen oder einem definierten Ereignis abhängt. Gemäß einer ersten Ausführungsform kann das Verfahren zeitabhängig getriggert werden.

Gemäß einer anderen Ausführungsform kann das Verfahren dadurch getriggert werden, daß der Inhalt eines oder mehrerer Register der CPU einem vorbestimmten Muster entspricht.

Eine noch weitere Ausführungsform der Erfindung sieht vor, daß das Verfahren jeweils nach Verarbeitung einer vorgegebenen Anzahl von Befehlen getriggert wird.

Bevorzugt wird eine Ausführungsform, wonach das Verfahren nur dann getriggert wird, wenn zwischen dem Befehl, nach dessen Abarbeitung die Checksumme als End-Checksumme in den Speicher gespeichert wurde, und der Anfangs-Checksumme zu Beginn der Abarbeitung des nächstfolgenden Befehls eine längere, definierte Zeitspanne liegt. Dadurch wird wertvolle Rechnerkapazität bei der Ausführung eines Programms mit vielen Befehlen gespart. Wenn man davon ausgeht, daß eine Manipulation der CPU, insbesondere bei Chipkarten, nicht während des laufenden Programms stattfindet, sondern wenn die Chipkarte aus dem Chipkartenterminal entfernt ist, so ist eine Manipulation der CPU mittels dieser zuletzt beschriebenen Ausführungsform dennoch zuverlässig feststellbar.

## Patentansprüche

1. Verfahren zur Sicherung eines Rechners mit zentraler Verarbeitungseinheit (CPU) gegen äußere Manipulation, **dadurch gekennzeichnet, daß** anhand von sich am Ende der Verarbeitung eines Befehls durch die CPU einstellenden Registerinhalten der CPU durch mathematische Verknüpfung eine End-Checksumme gebildet und gespeichert wird und anhand der sich vor Beginn der Verarbeitung des nächstfolgenden Befehls durch die CPU einstellenden Registerinhalte eine Anfangs-Checksumme gebildet wird, wobei eine Fehlermeldung erfolgt, wenn die Anfangs-Checksumme nicht mit der End-Checksumme übereinstimmt.

2. Verfahren nach Anspruch 1, **dadurch gekennzeichnet, daß** beim Laden des Befehls ein Zähler gestartet wird, welcher die Taktzyklen, die zur Abarbeitung des Befehls notwendig sind, zählt und bei Über- oder Unterschreiten der vorgegebenen Taktzyklen ein Fehlersignal ausgibt.

3. Verfahren nach Anspruch 2, **dadurch gekennzeichnet, daß** das Fehlersignal einen Interrupt auslöst oder zur Einstellung der Taktsignalversorgung führt.

4. Verfahren nach einem der Ansprüche 1 bis 3, **dadurch gekennzeichnet, daß** die Anzahl der zur Abarbeitung eines Befehls notwendigen Taktzyklen aus dem OP-Code des Befehls durch eine Logikschaltung erhalten wird.

5. Verfahren nach einem der Ansprüche 1 bis 4, **dadurch gekennzeichnet, daß** die mathematische Verknüpfung mittels Exklusiv-Oder-Verknüpfung der Registerinhalte erfolgt.

6. Verfahren nach einem der Ansprüche 1 bis 5, **dadurch gekennzeichnet, daß** die Initiierung des Verfahrens durch zufällige oder definierte Ereignisse getriggert wird.

7. Verfahren nach Anspruch 6, **dadurch gekennzeichnet, daß** das Verfahren zeitabhängig getriggert wird.

8. Verfahren nach Anspruch 6, **dadurch gekennzeichnet, daß** das Verfahren getriggert wird, wenn der Inhalt eines oder mehrerer Register der CPU einem vorbestimmten Muster entspricht.

9. Verfahren nach Anspruch 6, **dadurch gekennzeichnet, daß** das Verfahren jeweils nach Verarbeitung einer vorgegebenen Anzahl von Befehlen getriggert wird.

10. Zentrale Verarbeitungseinheit (CPU) für einen Rechner zur Durchführung des Verfahrens nach einem der Ansprüche 1 bis 6, umfassend
- eine Verknüpfung mehrerer Register der CPU durch logische Verknüpfungsglieder zur Bildung einer Checksumme,
- einen Checksummenspeicher zur Speicherung einer von den logischen Verknüpfungsgliedern gebildeten, ersten Checksumme,
- einen Komparator zum Vergleichen einer von den logischen Verknüpfungsgliedern gebildeten, zweiten Checksumme mit der im Speicher gespeicherten, ersten Checksumme und
- eine Steuereinrichtung zum Steuern der Einspeicherung der ersten Checksumme in den Checksummenspeicher und zum Steuern des Komparators.

11. Zentrale Verarbeitungseinheit nach Anspruch 10, **gekennzeichnet durch** einen Zähler zum Zählen der für eine Befehlsabarbeitung benötigten Taktzyklen.

12. Zentrale Verarbeitungseinheit nach Anspruch 10 oder 11, **gekennzeichnet durch** eine Logikschaltung zum Bestimmen der für die Abarbeitung eines Befehls notwendigen Taktzyklen aus dem OP-Code des Befehls.

13. Rechner umfassend eine zentrale Verarbeitungseinheit nach einem der Ansprüche 10 bis 12.

14. Chipkarte umfassend eine zentrale Verarbeitungseinheit nach einem der Ansprüche 10 bis 12.

## Claims

1. A method for protecting a computer with a central processing unit (CPU) from external manipulation, **characterized in that** a final check sum is formed by mathematical combination with reference to register contents of the CPU arising at the end of processing of an instruction by the CPU, and stored, and an initial check sum is formed with reference to the register contents arising before the onset of processing of the next instruction by the CPU, an error message being effected if the initial check sum does not match the final check sum.

2. A method according to claim 1, **characterized in that** upon loading of the instruction a counter is started for counting the clock cycles necessary for executing the instruction and outputting an error signal when the predetermined clock cycles are overshot or undershot.

3. A method according to claim 2, **characterized in that** the error signal triggers an interrupt or leads to discontinuance of the clock signal supply.

4. A method according to any of claims 1 to 3, **characterized in that** the number of clock cycles necessary for executing an instruction is obtained by a logic circuit from the opcode of the instruction.

5. A method according to any of claims 1 to 4, **characterized in that** the mathematical combination takes place by means of exclusive-OR combination of the register contents.

6. A method according to any of claims 1 to 5, **characterized in that** the initiation of the method is triggered by random or defined events.

7. A method according to claim 6, **characterized in that** the method is triggered in time-dependent fashion.

8. A method according to claim 6, **characterized in that** the method is triggered when the content of one or more registers of the CPU corresponds to a predetermined pattern.

9. A method according to claim 6, **characterized in that** the method is triggered after processing of a predetermined number of instructions in each case.

10. A central processing unit (CPU) for a computer for carrying out the method according to any of claims 1 to 6, comprising
- a combination of several registers of the CPU by logic elements to form a check sum,
- a check sum memory for storing a first check sum formed by the logic elements,
- a comparer for comparing a second check sum formed by the logic elements with the first check sum stored in the memory, and
- a control device for controlling the storage of the first check sum in the check sum memory and for controlling the comparer.

11. A central processing unit according to claim 10, **characterized by** a counter for counting the clock cycles required for an instruction execution.

12. A central processing unit according to claim 10 or 11, **characterized by** a logic circuit for determining from the opcode of the instruction the clock cycles necessary for executing an instruction.

13. A computer comprising a central processing unit according to any of claims 10 to 12.

14. A smart card comprising a central processing unit according to any of claims 10 to 12.

## Revendications

1. Procédé pour la protection contre des manipulations extérieures d'un calculateur avec une unité centrale de traitement (CPU), **caractérisé en ce que**, sur la base de contenus de registres de l'unité centrale de traitement, s'établissant à la fin du traitement d'une instruction par l'unité centrale de traitement, un total de contrôle final est formé par un enchaînement mathématique et est mémorisé et, sur la base des contenus des registres, s'établissant avant le début du traitement de l'instruction suivante par l'unité centrale de traitement, un total de contrôle initial est formé, un message d'erreur étant émis si le total de contrôle initial ne correspond pas au total de contrôle final.

2. Procédé selon la revendication 1, **caractérisé en ce que**, lors du chargement de l'instruction, a lieu le démarrage d'un compteur, qui compte les cycles de cadencement, qui sont nécessaires pour traiter l'instruction et, qui émet un signal d'erreur si les cycles de cadencement imposés sont dépassés ou ne sont pas atteints.

3. Procédé selon la revendication 2, **caractérisé en ce que** le signal d'erreur déclenche un signal d'interruption ou conduit à l'arrêt de la fourniture des signaux de cadencement.

4. Procédé selon l'une des revendications 1 à 3, **caractérisé en ce que** le nombre de cycles de cadencement nécessaires pour le traitement d'une instruction est obtenu par l'intermédiaire d'un circuit logique à partir du code opération de l'instruction.

5. Procédé selon l'une des revendications 1 à 4, **caractérisé en ce que** l'enchaînement mathématique a lieu par un enchaînement OU exclusif des contenus des registres.

6. Procédé selon l'une des revendications 1 à 5, **caractérisé en ce que** l'initiation du procédé est déclenchée par des événements fortuits ou définis.

7. Procédé selon la revendication 6, **caractérisé en ce que** le procédé est déclenché en fonction du temps.

8. Procédé selon la revendication 6, **caractérisé en ce que** le procédé est déclenché lorsque le contenu d'un ou de plusieurs registres de l'unité centrale de traitement correspond à un modèle prédéfini.

9. Procédé selon la revendication 6, **caractérisé en ce que** le procédé est déclenché respectivement après le traitement d'un nombre imposé d'instructions.

10. Unité centrale de traitement (CPU) pour un calculateur servant à la réalisation du procédé selon l'une des revendications 1 à 6 comprenant:
- un enchaînement de plusieurs registres de l'unité centrale de traitement au moyen d'éléments d'enchaînement logiques pour la formation d'un total de contrôle,
- une mémoire de totaux de contrôle pour la mémorisation d'un premier total de contrôle formé par les éléments d'enchaînement logiques,
- un comparateur pour la comparaison d'un deuxième total de contrôle formé par les éléments d'enchaînement logiques avec le premier total de contrôle mémorisé dans la mémoire et
- un dispositif de commande pour la commande de la mémorisation du premier total de contrôle dans la mémoire des totaux de contrôle et pour la commande du comparateur.

11. Unité centrale de traitement selon la revendication 10, **caractérisée par** l'utilisation d'un compteur pour compter les cycles de cadencement nécessaires pour le traitement d'une instruction.

12. Unité centrale de traitement selon la revendication 10 ou 11, **caractérisée par** la mise en oeuvre d'un circuit logique pour la détermination, à partir du code opération de l'instruction, des cycles de cadencement nécessaires pour le traitement d'une instruction.

13. Calculateur comprenant une unité centrale de traitement selon l'une des revendications 10 à 12.

14. Carte à puce comprenant une unité centrale de traitement selon l'une des revendications 10 à 12.
